# EUROPEAN PATENT SPECIFICATION

(11) **EP 3 159 386 B1**
(45) Date of publication and mention of the grant of the patent: **25.08.2021**
(21) Application number: 15191301.9
(22) Date of filing: 23.10.2015
(51) Int. Cl.: C09J 5/06, C09J 5/08

(54) **THERMALLY POST-CURABLE PRESSURE SENSITIVE ADHESIVE**
THERMISCH NACHHÄRTBARER DRUCKEMPFINDLICHER KLEBER
ADHÉSIF SENSIBLE À LA PRESSION POST-DURCISSABLE THERMIQUEMENT

(43) Date of publication of application: 26.04.2017
(73) Proprietor: 3M Innovative Properties Company, St. Paul, MN 55133-3427 (US)
(72) Inventor: Unverhau, Kerstin, 41453 Neuss (DE); Richter, Mareike, 41453 Neuss (DE); Mechernich, Silke, 41453 Neuss (DE); Klink, Anne-Marie, 41453 Neuss (DE)
(74) Representative: Mathys & Squire

(56) References cited:
- EP-A1- 2 886 620
- WO-A1-2013/074446
- None

## Description

### Technical Field

The present disclosure relates generally to the field of adhesives, more specifically to the field of pressure sensitive adhesives (PSA). The present disclosure also relates to a method of applying such pressure sensitive adhesives and uses thereof.

### Background

Adhesives have been used for a variety of marking, holding, protecting, sealing and masking purposes. Adhesive tapes generally comprise a backing, or substrate, and an adhesive. One type of adhesive which is particularly preferred for many applications is represented by pressure sensitive adhesives.

Pressure-sensitive tapes are virtually ubiquitous in the home and workplace. In its simplest configuration, a pressure-sensitive tape comprises an adhesive and a backing, and the overall construction is tacky at the use temperature and adheres to a variety of substrates using only moderate pressure to form the bond. In this fashion, pressure-sensitive tapes constitute a complete, self-contained bonding system.

Pressure sensitive adhesives (PSAs) are well known to one of ordinary skill in the art, and according to the Pressure-Sensitive Tape Council, PSAs are known to possess properties including the following: (1) aggressive and permanent tack, (2) adherence with no more than finger pressure, (3) sufficient ability to hold onto an adherend, and (4) sufficient cohesive strength to be removed cleanly from the adherend. Materials that have been found to function well as PSAs include polymers designed and formulated to exhibit the requisite viscoelastic properties resulting in a desired balance of tack, peel adhesion, and shear holding power. PSAs are characterized by being normally tacky at room temperature (e.g., 20°C). PSAs do not embrace compositions merely because they are sticky or adhere to a surface.

These requirements are assessed generally by means of tests which are designed to individually measure tack, adhesion (peel strength), and cohesion (shear holding power), as noted in A.V. Pocius in Adhesion and Adhesives Technology: An Introduction, 2nd Ed., Hanser Gardner Publication, Cincinnati, OH, 2002. These measurements taken together constitute the balance of properties often used to characterize a PSA.

With broadened use of pressure-sensitive adhesive tapes over the years, performance requirements have become more demanding. Shear holding capability, for example, which originally was intended for applications supporting modest loads at room temperature, has now increased substantially for many applications in terms of operating temperature and load. Indeed, many applications require pressure sensitive adhesives to support a load at elevated temperatures, typically in the range of from 70°C to 90°C, for which high cohesive strengths are required. So-called high performance pressure-sensitive tapes are those capable of supporting loads at elevated temperatures for 10,000 minutes. Increased shear holding capability may generally be accomplished by crosslinking the PSA, although considerable care must be exercised so that high levels of tack and adhesion are retained in order to retain the aforementioned balance of properties.

In addition, when used as attachment devices for a variety of assembly and manufacturing applications, such as interior or exterior automotive mounting of panels and molding, or in the construction industry, pressure sensitive adhesives are additionally required to provide good adhesion performance to uneven or irregular surfaces. In that context, the application of PSA foam tapes to uneven or irregular surfaces is a recognized challenge, since the conformability of the adhesive tape is limited. In some specialized applications, such as taped seal on body and weather-strip tape applications for the automotive industry, successful tape application is rather challenging, especially in small radii in car bodies and critical topologies such as spot welds or other surface structures, since the adhered tape needs to combine two rather contradicting requirements. On the one hand, the tape has to resist high deformation forces, therefore high stress relaxation capabilities and good cohesive strength are required. On the other hand, the same unique tape needs to provide sufficient conformability to the uneven or irregular surface, and therefore excellent surface wetting capabilities are required for the tape.

It is therefore a recognized and continuous challenge in the adhesive tapes industry to provide pressure sensitive adhesive assemblies combining good adhesion, good stress relaxation and good cohesion properties. In order to optimize the adhesion of the PSA assembly to uneven or irregular substrates, an excellent surface wetting is additionally required.

Partial solutions have been described e.g. in EP-A1-0798354 (Feichtmeier), whereby post-curable systems based on the so-called "DICY-chemistry" are described, wherein an epoxy-amine curing reaction is triggered with heat. The post-curable systems described in the art typically require complex handling of pre-adhesive compositions including carefully controlled curing or crosslinking steps. Also, the described partial solutions generally do not provide industrially viable solutions for the production of pressure sensitive adhesives having acceptable characteristics, in particular for specialized applications, such as taped seal on body and weather-strip tape applications, whereby successful tape application is required on challenging topologies such as spot welds.

Without contesting the technical advantages associated with the pressure sensitive adhesives known in the art, there is still a need for a cost-effective pressure sensitive adhesives having versatile adhesion and cohesive characteristics, in particular with respect to adhesion, stress relaxation and cohesion properties, whilst providing excellent surface wetting properties on substrates, in particular substrates provided with uneven or irregular surfaces.

Other advantages of the pressure sensitive adhesives and methods of the disclosure will be apparent from the following description.

### Summary

According to one aspect, the present disclosure relates to a method of applying a pressure sensitive adhesive to a substrate, which comprises the steps of:
a) providing an uncrosslinked curable precursor of a pressure sensitive adhesive comprising:
   (1) a (meth)acrylate copolymer component comprising:
      i. C₁-C₃₂ (meth)acrylic acid ester monomer units;
      ii. ethylenically unsaturated monomer units having functional groups selected from the group consisting of acid, hydroxyl, acid anhydride, epoxide, amine, amide groups, and any combinations thereof; and
      iii. optionally, further ethylenically unsaturated monomer units which are copolymerizable with monomer units (i) and/or (ii);
   (2) a thermal crosslinking system comprising a thermal crosslinker and optionally, a crosslinking accelerator; wherein the thermal crosslinker is selected from the group of compounds comprising functional groups selected from the group consisting of epoxide, oxazoline. oxetane, blocked or non-blocked isocyanates, and any combinations or mixtures thereof;
   (3) at least one expandable microsphere;
   (4) optionally, a tackifying system; and
   (5) optionally, at least one pigment;
b) subjecting the curable precursor of a pressure sensitive adhesive to a first heating step such that the curable precursor of a pressure sensitive adhesive is partially crosslinked;
c) contacting the curable precursor of a pressure sensitive adhesive obtained in step b) to at least part of the surface of the substrate;
d) subjecting the curable precursor of a pressure sensitive adhesive to a second heating step such that the curable precursor of a pressure sensitive adhesive is fully crosslinked; and
e) optionally, allowing the polymeric foam layer to cool down on the substrate.

In another aspect, the present disclosure relates to a composite assembly comprising:
a) a substrate provided with an uneven surface; and
b) an uncrosslinked curable precursor of a pressure sensitive adhesive or a partially cured precursor of a pressure sensitive adhesive as described above applied onto at least part of the surface of the substrate, thereby forming a layer of a curable precursor of a pressure sensitive adhesive.

According to still another aspect, the present disclosure relates to the use of an uncrosslinked curable precursor of a pressure sensitive adhesive or a partially cured precursor of a pressure sensitive adhesive as described above, for the bonding to a substrate provided with an uneven surface.

### Detailed description

According to a first aspect, the present disclosure relates to a method of applying a pressure sensitive adhesive to a substrate, which comprises the steps of:
a) providing an uncrosslinked curable precursor of a pressure sensitive adhesive comprising:
   (1) a (meth)acrylate copolymer component comprising:
      i. C₁-C₃₂ (meth)acrylic acid ester monomer units;
      ii. ethylenically unsaturated monomer units having functional groups selected from the group consisting of acid, hydroxyl, acid anhydride, epoxide, amine, amide groups, and any combinations thereof; and
      iii. optionally, further ethylenically unsaturated monomer units which are copolymerizable with monomer units (i) and/or (ii);
   (2) a thermal crosslinking system comprising a thermal crosslinker and optionally, a crosslinking accelerator; wherein the thermal crosslinker is selected from the group of compounds comprising functional groups selected from the group consisting of epoxide, oxazoline. oxetane, blocked or non-blocked isocyanates, and any combinations or mixtures thereof;
   (3) at least one expandable microsphere;
   (4) optionally, a tackifying system; and
   (5) optionally, at least one pigment;
b) subjecting the curable precursor of a pressure sensitive adhesive to a first heating step such that the curable precursor of a pressure sensitive adhesive is partially crosslinked;
c) contacting the curable precursor of a pressure sensitive adhesive obtained in step b) to at least part of the surface of the substrate;
d) subjecting the curable precursor of a pressure sensitive adhesive to a second heating step such that the curable precursor of a pressure sensitive adhesive is fully crosslinked; and
e) optionally, allowing the polymeric foam layer to cool down on the substrate.

In the context of the present disclosure, it has surprisingly been found that a method of applying a pressure sensitive adhesive to a substrate as described above allows producing pressure sensitive adhesives having versatile adhesion and cohesive characteristics, in particular with respect to adhesion, stress relaxation and cohesion properties, whilst providing excellent surface wetting properties on substrates, in particular substrates provided with uneven or irregular surfaces. The pressure sensitive adhesives obtained by the method of the invention are particularly suitable for adhesion to challenging topologies such as spot welds, and are most suited for specialized applications, such as taped seal on body and weather-strip tape applications.

Without wishing to be bound by theory, it is believed that this outstanding suitability is due in particular to the steps of providing an uncrosslinked curable precursor comprising a thermal crosslinking system, and contacting a partially crosslinked curable precursor of a pressure sensitive adhesive - resulting from a first heating step- to a substrate, followed by the step of subjecting the partially crosslinked curable precursor of a pressure sensitive adhesive to a second heating step such that the curable precursor of a pressure sensitive adhesive is fully crosslinked. Still without wishing to be bound by theory, it is believed that the curable precursor of a pressure sensitive adhesive partially crosslinked by thermal crosslinking, and when contacted to the surface of the substrate, provides excellent surface wetting characteristics, in particular on substrates provided with uneven or irregular surfaces. The second heating step applied to the partially crosslinked curable precursor of a pressure sensitive adhesive results in a fully crosslinked pressure sensitive adhesive provided with excellent cohesive strength and shear holding power.

The method of applying a pressure sensitive adhesive to a substrate according to the present disclosure allows in-place and controlled crosslinking of a curable precursor of a pressure sensitive adhesive producing pressure sensitive adhesives having versatile and excellent adhesion and cohesive characteristics, in particular when applied to substrates or articles provided with uneven or irregular surfaces.

In the context of the present disclosure, the expressions "uneven surface" and "irregular surface" are used interchangeably, and are typically meant to refer to a surface which is discontinuous and/or non-flat and/or non-horizontal. Throughout the present disclosure, the expression "uneven surface" is preferably intended to refer to a surface typically provided with at least one structure selected from the group consisting of cavities, holes, apertures, orifices, pits, openings, gaps, troughs, edges, depressions, elevations, and any combinations thereof.

In the context of the present disclosure, the expressions "curing" and "crosslinking" are used interchangeably. The term "crosslinking" used throughout the present description is meant to designate exclusively "thermal crosslinking", i.e. crosslinking induced by thermal treatment, wherein "crosslinking" is meant to refer to the forming of covalent and/or coordinative chemical bonds between polymer chains. In particular, radiation-induced crosslinking (such as UV-induced crosslinking) is outside the definition of the term "crosslinking" used throughout the present description.

The term "uncrosslinked" is meant to express that the curable precursor of a pressure sensitive adhesive has a degree of (thermal) crosslinking of less than 5%, typically less than 3%, less than 2%, less than 1%, or even less than 0.5%. The degree of crosslinking of the curable precursor of a pressure sensitive adhesive may be determined according to any techniques commonly known to those skilled in the art. Unless otherwise stated, the degree of crosslinking is determined according to swelling techniques, in particular according to standard method ASTM D2765-11, using tetrahydrofuran as extraction solvent.

In the context of the present disclosure, the expression "partially crosslinked" is meant to express that the curable precursor of a pressure sensitive adhesive has a degree of (thermal) crosslinking of more than 5%, typically more than 10%, more than 15%, or even more than 20%.

The pressure sensitive adhesive composition for use herein comprises, as a first technical feature, a (meth)acrylate copolymer component. In the context of the present disclosure, the terms "(meth)acrylate copolymer" and "polyacrylate" may be used interchangeably.

The (meth)acrylate copolymer component for use herein comprises:
i. C₁-C₃₂ (meth)acrylic acid ester monomer units;
ii. ethylenically unsaturated monomer units having functional groups selected from the group consisting of acid, hydroxyl, acid anhydride, epoxide, amine, amide groups, and any combinations thereof; and
iii. optionally, further ethylenically unsaturated monomer units which are copolymerizable with monomer units (i) and/or (ii);

As used herein, the term "alkyl (meth)acrylic acid ester", "alkyl (meth)acrylate" and "alkyl (meth)acrylate ester" are used interchangeably. The term "(meth)acrylate" refers to an acrylate, methacrylate, or both. The term "(meth)acrylic" refers to methacrylic, acrylic, or both. A (meth)acrylic-based" material refers to one prepared from one or more monomers having a (meth)acryloyl group, which is a group of formula CH₂=C(R)-(CO)-where R is hydrogen or methyl.

The term "alkyl" refers to a monovalent group which is a saturated hydrocarbon. The alkyl can be linear, branched, cyclic, or combinations thereof and typically has 1 to 32 carbon atoms. In some embodiments, the alkyl group contains 1 to 25, 1 to 20, 1 to 18, 1 to 12, 1 to 10, 1 to 8, 1 to 6, or 1 to 4 carbon atoms. Examples of alkyl groups include, but are not limited to, methyl, ethyl, n-propyl, isopropyl, n-butyl, isobutyl, tert-butyl, n-pentyl, n-hexyl, cyclohexyl, n-heptyl, n-octyl, 2-ethylhexyl, 2-octyl, iso-octyl and 2-propylheptyl.

The (meth)acrylate copolymer component for use herein comprises C₁-C₃₂ (meth)acrylic acid ester monomer units. Suitable C₁-C₃₂ (meth)acrylic acid ester monomer units for use herein may be easily identified by those skilled in the art, in the light of the present disclosure.

In a typical aspect, the (meth)acrylate copolymer component for use herein comprises linear or branched alkyl (meth)acrylate ester, preferably a non-polar linear or branched alkyl (meth)acrylate ester having a linear or branched alkyl group comprising from 1 to 32 carbon atoms.

In a particular aspect of the present disclosure, the C₁-C₃₂ (meth)acrylic acid ester monomer units for use herein are selected from the group of C₁-C₂₅ (meth)acrylic acid ester monomer units, C₁-C₂₀ (meth)acrylic acid ester monomer units, C₁-C₁₈ (meth)acrylic acid ester monomer units, C₂-C₁₆ (meth)acrylic acid ester monomer units, C₂-C₁₄ (meth)acrylic acid ester monomer units, or even C₂-C₁₄ (meth)acrylic acid ester monomer units.

In another particular aspect, the C₁-C₃₂ (meth)acrylic acid ester monomer units for use herein are selected from the group of C₄-C₃₀ (meth)acrylic acid ester monomer units, C₄-C₁₄ (meth)acrylic acid ester monomer units, or even from the group of C₄-C₉ (meth)acrylic acid ester monomer units.

According to another particular aspect of the present disclosure, the C₁-C₃₂ (meth)acrylic acid ester monomer units are selected from the group consisting of C₄-C₉ (meth)acrylic acid ester monomer units, preferably from the group consisting of n-butyl acrylate, n-butyl methacrylate, n-pentyl acrylate, n-pentyl methacrylate, n-amyl acrylate, n-hexyl acrylate, hexyl methacrylate, n-heptyl (meth)acrylate, n-octyl acrylate, n-octyl methacrylate, n-nonyl (meth)acrylate, isobutyl (meth)acrylate, isooctyl acrylate, isooctyl methacrylate, 2-ethylhexyl acrylate, 2-ethylhexyl methacrylate, 2-octyl acrylate, and any combinations or mixtures thereof.

In another exemplary aspect, the C₁-C₃₂ (meth)acrylic acid ester monomer units are selected from the group consisting of C₁₀-C₃₀ (meth)acrylic acid ester monomer units, preferably from the group consisting of propylheptyl (meth)acrylate, (meth)acrylic acid esters of 2-alkyl alkanols (also known as Guerbet alcohols), in particular (meth)acrylic acid esters derived from a C₁₂-C₃₀ 2-alkyl alkanol and any combinations or mixtures thereof.

In a preferred aspect of the present disclosure, the C₁-C₃₂ (meth)acrylic acid ester monomer units are selected from the group consisting of isooctyl acrylate, 2-ethylhexyl acrylate, and any combinations or mixtures thereof.

In another exemplary aspect, the C₁-C₃₂ (meth)acrylic acid ester monomer units are selected from the group consisting of methyl (meth)acrylate, ethyl (meth)acrylate, n-propyl (meth)acrylate, isopropyl (meth)acrylate, n-butyl acrylate, isobutyl acrylate, tert-butyl (meth)acrylate, n-pentyl (meth)acrylate, iso-pentyl (meth)acrylate, n-hexyl (meth)acrylate, iso-hexyl (meth)acrylate, cyclohexyl (meth)acrylate, phenyl (meth)acrylate, octyl (meth)acrylate, iso-octyl (meth)acrylate, 2-octyl(meth)acrylate, 2-ethylhexyl (meth)acrylate, decyl (meth)acrylate, lauryl (meth)acrylate, 2-propylheptyl (meth)acrylate, stearyl (meth)acrylate, isobornyl acrylate, benzyl (meth)acrylate, octadecyl acrylate, nonyl acrylate, dodecyl acrylate, isophoryl (meth)acrylate, and any combinations or mixtures thereof.

In an advantageous aspect, the C₁-C₃₂ (meth)acrylic acid ester monomer units are selected from the group consisting of iso-octyl (meth)acrylate, 2-ethylhexyl (meth)acrylate, 2-propylheptyl (meth)acrylate, 2-octyl (meth)acrylate, butyl acrylate, and any combinations or mixtures thereof; more preferably from the group consisting of isooctyl acrylate, 2-ethylhexyl acrylate, 2-octyl acrylate, and 2-propylheptyl acrylate.

In another aspect, the C₁-C₃₂ (meth)acrylic acid ester monomer units are selected from the group consisting of 2-ethylhexyl acrylate, and iso-octyl acrylate. In a particularly preferred aspect, the polymeric base material for use herein comprises or consists of 2-ethylhexyl acrylate.

According to another advantageous aspect, the C₁-C₃₂ (meth)acrylic acid ester monomer units comprise 2-octyl(meth)acrylate. The 2-octyl (meth)acrylate may be prepared by conventional techniques from 2-octanol and (meth)acryloyl derivates such as esters, acids and acyl halides. The 2-octanol may be prepared by treatment of ricinoleic acid, derived from castor oil, (or ester or acyl halide thereof) with sodium hydroxide, followed by distillation from the co-product sebacic acid.

It is however preferred that the 2-octyl(meth)acrylate monomer for use herein is at least partly, preferably completely (i.e. 100 wt%) derived from biological material, more preferably from a plant material. This may advantageously be used to provide adhesive films/tapes which are at least partly derived from "green" sources, which is ecologically more sustainable and also reduces the dependency on mineral oil and the price development.

In the context of the present disclosure, the term "derived from biological material" is meant to express that from a certain chemical ingredient, at least a part of its chemical structure comes from biological materials, preferably at least 50 wt% of its structure. This definition is in principle the same as for bio-diesel fuel, in which usually only the fatty acid part originates from biological sources whereas the methanol may also be derived from fossil material like coal or mineral oil.

Accordingly, in one particular aspect, at least 50 wt%, at least 75 wt%, or even 100 wt% of the chemical structure of the 2-octyl(meth)acrylate is at least partly, preferably completely (i.e. 100 wt%) derived from biological material, more preferably from a plant material.

The C₁-C₃₂ (meth)acrylic acid ester monomer units for use herein may be present in the (meth)acrylate copolymer component in any suitable amounts. In some exemplary aspects, the C₁-C₃₂ (meth)acrylic acid ester monomer units for use herein may be present in the (meth)acrylate copolymer component in an amount of from 45 wt% to 99 wt%, based on the weight of the (meth)acrylate copolymer component.

The (meth)acrylate copolymer component for use herein further comprises ethylenically unsaturated monomer units having functional groups selected from the group consisting of acid, hydroxyl, acid anhydride, epoxide, amine, amide groups, and any combinations thereof. Suitable ethylenically unsaturated monomer units having required functional groups may be easily identified by those skilled in the art, in the light of the present disclosure.

In an advantageous aspect, the functional groups present in the ethylenically unsaturated monomer units for use herein are able to enter into a reaction with epoxide groups. According to an exemplary aspect of the present disclosure, the ethylenically unsaturated monomer units having functional groups are selected from the group of ethylenically unsaturated monomer units having functional groups selected from the group consisting of carboxyl, carboxylic acid, sulphonic acid, phosphonic acid, hydroxyl, acid anhydride, epoxide, amine, amide groups, and any combinations thereof.

In a particular aspect, the ethylenically unsaturated monomer units having functional groups for use herein are selected from the group of ethylenically unsaturated monomer units having functional groups selected from the group consisting of carboxyl, hydroxyl, and any combinations thereof.

In another particular aspect of the present disclosure, the ethylenically unsaturated monomer units having functional groups for use herein are selected from the group consisting of acrylic acid, methacrylic acid, itaconic acid, maleic acid, fumaric acid, crotonic acid, aconitic acid, dimethylacrylic acid, β-acryloyloxypropionic acid, trichloroacrylic acid, vinylacetic acid, vinylphosphonic acid, itaconic acid, maleic anhydride, hydroxyethyl acrylate, hydroxypropyl acrylate, hydroxyethyl methacrylate, hydroxypropyl methacrylate, 6-hydroxyhexyl methacrylate, allyl alcohol, glycidyl acrylate, glycidyl methacrylate, and any combinations or mixtures thereof.

According to a preferred aspect, the ethylenically unsaturated monomer units having functional groups are selected from the group of acrylic acid monomers.

The ethylenically unsaturated monomer units having functional groups for use herein may be present in the (meth)acrylate copolymer component in any suitable amounts. In some exemplary aspects, the ethylenically unsaturated monomer units having functional groups for use herein may be present in the (meth)acrylate copolymer component in an amount of from 1 wt% to 15 wt%, based on the weight of the (meth)acrylate copolymer component.

The (meth)acrylate copolymer component for use herein may further comprise, as an optional ingredient, further ethylenically unsaturated monomer units which are copolymerizable with monomer units (i) and/or (ii). Suitable further ethylenically unsaturated monomer units which are copolymerizable with monomer units (i) and/or (ii) may be easily identified by those skilled in the art, in the light of the present disclosure.

As further ethylenically unsaturated monomer units which are copolymerizable with monomer units (i) and/or (ii), it is possible in principle to use all compounds with vinylic functionalization which are copolymerizable with monomer units (i) and/or (ii). The further ethylenically unsaturated monomer units for use herein may advantageously serve to adjust the properties of the resultant pressure sensitive adhesive composition.

Suitable further ethylenically unsaturated monomer units for use herein include, but are not limited to, those selected from the group consisting of methyl acrylate, ethyl acrylate, propyl acrylate, methyl methacrylate, ethyl methacrylate, benzyl acrylate, benzyl methacrylate, sec-butyl acrylate, tert-butyl acrylate, phenyl acrylate, phenyl methacrylate, isobornyl acrylate, isobornyl methacrylate, tert-butylphenyl acrylate, tert-butylphenyl methacrylate, dodecyl methacrylate, isodecyl acrylate, lauryl acrylate, n-undecyl acrylate, stearyl acrylate, tridecyl acrylate, behenyl acrylate, cyclohexyl methacrylate, cyclopentyl methacrylate, phenoxyethyl acrylate, phenoxyethyl methacrylate, 2-butoxyethyl methacrylate, 2-butoxyethyl acrylate, 3,3,5-trimethylcyclo-hexyl acrylate, 3,5-dimethyladamantyl acrylate, 4-cumylphenyl methacrylate, cyanoethyl acrylate, cyanoethyl methacrylate, 4-biphenyl acrylate, 4-biphenyl methacrylate, 2-naphthyl acrylate, 2-naphthyl methacrylate, tetrahydrofurfuryl acrylate, diethylamino-ethyl acrylate, diethylaminoethyl methacrylate, dimethylaminoethyl acrylate, dimethyl-aminoethyl methacrylate, 2-butoxyethyl acrylate, 2-butoxyethyl methacrylate, methyl 3-methoxyacrylate, 3-methoxybutyl acrylate, phenoxyethyl acrylate, phenoxyethyl methacrylate, 2-phenoxyethyl methacrylate, butyldiglycol methacrylate, ethylene glycol acrylate, ethylene glycol monomethylacrylate, methoxy polyethylene glycol methacrylate 350, methoxy polyethylene glycol methacrylate 500, propylene glycol monomethacrylate, butoxydiethylene glycol methacrylate, ethoxytriethylene glycol methacrylate, octafluoropentyl acrylate, octafluoropentyl methacrylate, 2,2,2-trifluoroethyl methacrylate, 1,1,1,3,3,3-hexafluoroisopropyl acrylate, 1,1,1,3,3,3-hexafluoroisopropyl methacrylate, 2,2,3,3,3-pentafluoropropyl methacrylate, 2,2,3,4,4,4-hexafluorobutyl methacrylate, 2,2,3,3,4,4,4-heptafluorobutyl acrylate, 2,2,3,3,4,4,4-heptafluorobutyl methacrylate, 2,2,3,3,4,4,5,5,6,6,7,7,8,8,8-pentadecafluorooctyl methacrylate, dimethylaminopropylacrylamide, dimethylaminopropylmethacrylamide, N-(1-metbylundecypacrylamide, N-(n-butoxymethyl)acrylamide, N-(butoxymethyl)methacrylamide, N-(ethoxymethyl)-acrylamide, N-(n-octadecyl)acrylamide, and also N,N-dialkyl-substituted amides, such as, for example, N,N-dimethylacrylamide, N,N-dimethylmethacrylamide, N-benzylacrylamide, N-isopropylacrylamide, N-tert-butylacrylamide, N-tert-octylacrylamide, N-methylolacryl-amide, N-methylolmethacrylamide, acrylonitrile, methacrylonitrile, vinyl ethers, such as vinyl methyl ether, ethyl vinyl ether, vinyl isobutyl ether, vinyl esters, such as vinyl acetate, vinyl chloride, vinyl halides, vinylidene chloride, vinylidene halides, vinylpyridine, 4-vinylpyridine, N-vinylphthalimide, N-vinyllactam, N-vinylpyrrolidone, styrene, α- and p-methylstyrene, α-butylstyrene, 4-n-butylstyrene, 4-n-decylstyrene, 3,4-dimethoxystyrene, macromonomers such as 2-polystyrene-ethyl methacrylate (molecular weight Mw from 4000 to 13 000 g/mol), poly(methyl methacrylate)ethyl methacrylate (Mw from 2000 to 8000 g/mol).

In an advantageous aspect of the present disclosure, the optional further ethylenically unsaturated monomer units which are copolymerizable with monomer units (i) and/or (ii) are selected from the group consisting of methyl acrylate, ethyl acrylate, propyl acrylate, methyl methacrylate, ethyl methacrylate, benzyl acrylate, benzyl methacrylate, sec-butyl acrylate, tert-butyl acrylate, phenyl acrylate, phenyl methacrylate, isobornyl acrylate, isobornyl methacrylate, tert-butylphenyl acrylate, tert-butylphenyl methacrylate, dodecyl methacrylate, isodecyl acrylate, lauryl acrylate, n-undecyl acrylate, stearyl acrylate, tridecyl acrylate, behenyl acrylate, cyclohexyl methacrylate, cyclopentyl methacrylate, and any combinations or mixtures thereof.

According to a particular aspect, the optional further ethylenically unsaturated monomer units which are copolymerizable with monomer units (i) are selected from the group consisting of methyl acrylate, ethyl acrylate, isobornyl acrylate, and any combinations or mixtures thereof.

The further ethylenically unsaturated monomer units which are copolymerizable with monomer units (i) and/or (ii) for use herein may be present in the (meth)acrylate copolymer component in any suitable amounts. In some exemplary aspects, the further ethylenically unsaturated monomer units which are copolymerizable with monomer units (i) and/or (ii) for use herein may be present in the (meth)acrylate copolymer component in an amount of from 0 wt% to 40 wt%, based on the weight of the (meth)acrylate copolymer component.

In a particular aspect, the (meth)acrylate copolymer component for use herein comprises:
a) from 45 wt% to 99 wt% of C₁-C₃₂ (meth)acrylic acid ester monomer units, based on the weight of the (meth)acrylate copolymer component;
b) from 1 wt% to 15 wt% of ethylenically unsaturated monomer units having functional groups, based on the weight of the (meth)acrylate copolymer component; and
c) from 0 wt% to 40 wt% of further ethylenically unsaturated polar monomer units which are copolymerizable with monomer units (i) and/or (ii), based on the weight of the (meth)acrylate copolymer component.

In the context of the present disclosure, the (meth)acrylate copolymer component for use herein may be present in the pressure sensitive adhesive composition in any suitable amounts. In some exemplary aspects, the (meth)acrylate copolymer component may be present in the pressure sensitive adhesive composition in an amount of from 20 wt% to 80 wt%, from 20 wt% to 70 wt%, from 25 wt% to 60 wt%, or even from 25 wt% to 50 wt% based on the weight of the pressure sensitive adhesive composition.

The (meth)acrylate copolymer component for use herein may be prepared by processes familiar to the skilled person, with particular advantage by conventional free-radical polymerizations or controlled radical polymerizations. A variety of conventional free radical polymerization methods, including solution, bulk (i.e., with little or no solvent), dispersion, emulsion, and suspension processes, which processes are familiar to the skilled person. The particular method used may be influenced by the use of the final pressure sensitive adhesive composition. The reaction product of the polymerizable materials can be random or block copolymers. The polyacrylates may be prepared by copolymerization of the monomeric components using the usual polymerization initiators and also, where appropriate, regulators (chain transfer agents), with polymerization taking place at the customary temperatures in bulk, in emulsion, such as in water or liquid hydrocarbons, for example, or in solution.

In an advantageous aspect, the (meth)acrylate copolymer component is prepared by polymerization of the monomers in solvents, more particularly in solvents with a boiling range from 50 to 150°C or from 60 to 120° C, using the customary amounts of polymerization initiators, these generally being 0.01% to 5%, more particularly 0.1% to 2%, by weight (based on the total weight of the monomers).

In some other methods of preparing the (meth)acrylate copolymer component for use herein, the (co)polymerizable material containing the monomers is partially polymerized so as to increase its viscosity to that corresponding to a viscous material. Generally, the main monomers and other optional monomers are mixed with a portion of the free radical polymerization initiator. Depending on the type of initiator added, the mixture is typically exposed to actinic radiation or heat to partially polymerize the monovalent monomers (i.e., monomers with a single ethylenically unsaturated group).

An initiator for free radical polymerization is typically added to the various monomers used to form the (co)polymerizable material, precursor of the (meth)acrylate copolymer component for use herein. The polymerization initiator can be a thermal initiator, a photoinitiator, or both. Any suitable thermal initiator or photoinitiator known for free radical polymerization reactions can be used. The initiator is typically present in an amount in the range of 0.01 to 5 weight percent, in the range of 0.01 to 2 weight percent, in the range of 0.01 to 1 weight percent, or in the range of 0.01 to 0.5 weight percent based on a total weight of (co)polymerizable material. Suitable in principle are all customary initiators that are familiar to the skilled person. Examples of free-radical sources are peroxides, hydroperoxides, and azo compounds, e.g., dibenzoyl peroxide, cumene hydroperoxide, cyclohexanone peroxide, di-tert-butyl peroxide, cyclohexylsulphonyl acetyl peroxide, diisopropyl percarbonate, tert-butyl peroctoate, benzopinacol. In one very preferred procedure, use is made as radical initiator of 2,2'-azobis(2-methylbutyronitrile) (Vazo® 67™ from DuPont) or 2,2'-azobis-(2-methylpropionitrile) (2,2'-azobisisobutyronitrile; AIBN; Vazo® 64™ DuPont).

In some aspects, a thermal initiator is used. Thermal initiators can be water-soluble or water-insoluble (i.e., oil-soluble) depending on the particular polymerization method used. Suitable water-soluble initiators include, but are not limited to, persulfates such as potassium persulfate, ammonium persulfate, sodium persulfate, and mixtures thereof; an oxidation-reduction initiator such as the reaction product of a persulfate and a reducing agent such as a metabisulfite (e.g., sodium metabisulfite) or a bisulfate (e.g., sodium bisulfate); or 4,4'-azobis(4-cyanopentanoic acid) and its soluble salts (e.g., sodium, potassium). Suitable oil-soluble initiators include, but are not limited to, various azo compounds such as those commercially available under the trade designation VAZO from E. I. DuPont de Nemours Co. including VAZO 67, which is 2,2'-azobis(2-methylbutane nitrile), VAZO 64, which is 2,2'-azobis(isobutyronitrile), and VAZO 52, which is (2,2'-azobis(2,4-dimethylpentanenitrile); and various peroxides such as benzoyl peroxide, cyclohexane peroxide, lauroyl peroxide, and mixtures thereof.

In some other aspects, a photoinitiator is used. Some exemplary photoinitiators are benzoin ethers (e.g., benzoin methyl ether or benzoin isopropyl ether) or substituted benzoin ethers (e.g., anisoin methyl ether). Other exemplary photoinitiators are substituted acetophenones such as 2,2-diethoxyacetophenone or 2,2-dimethoxy-2-phenylacetophenone (commercially available under the trade designation IRGACURE 651 from BASF Corp. (Florham Park, NJ) or under the trade designation ESACURE KB-1 from Sartomer (Exton, PA)). Still other exemplary photoinitiators are substituted alpha-ketols such as 2-methyl-2-hydroxypropiophenone, aromatic sulfonyl chlorides such as 2-naphthalenesulfonyl chloride, and photoactive oximes such as 1-phenyl-1,2-propanedione-2-(O-ethoxycarbonyl)oxime. Other suitable photoinitiators include, for example, 1-hydroxy cyclohexyl phenyl ketone (IRGACURE 184), bis(2,4,6-trimethylbenzoyl)phenylphosphineoxide (IRGACURE 819), 1-[4-(2-hydroxyethoxy)phenyl]-2-hydroxy-2-methyl-1-propane-1-one (IRGACURE 2959), 2-benzyl-2-dimethylammo-1-(4-morpholmophenyl)butanone (IRGACURE 369), 2-methyl-1-[4-(methylthio)phenyl]-2-morpholmopropan-1-one (IRGACURE 907), and 2-hydroxy-2-metbyl-1-pbenyl propan-1-one (DAROCUR 1173).

The particular (co)polymerizable material used to produce the (meth)acrylate copolymer component may optionally further contain chain transfer agents to control the molecular weight of the resultant elastomeric material. Examples of useful chain transfer agents include, but are not limited to, carbon tetrabromide, alcohols, mercaptans such as isooctylthioglycolate, and mixtures thereof. If used, the polymerizable mixture may include up to 0.5 weight of a chain transfer agent based on a total weight of polymerizable material. For example, the polymerizable mixture may contain 0.01 to 0.5 weight percent, 0.05 to 0.5 weight percent, or 0.05 to 0.2 weight percent chain transfer agent.

The (co)polymerizable material used to produce the (meth)acrylate copolymer component may include an organic solvent or may be free or essentially free of an organic solvent. As used herein, the term "essentially free" in reference to an organic solvent means that the organic solvent is present in an amount less than 5 weight percent, less than 4 weight percent, less than 3 weight percent, less than 2 weight percent, or less than 1 weight percent based on the weight of the polymerizable material. If an organic solvent is included in the polymerizable material, the amount is often selected to provide the desired viscosity. Examples of suitable organic solvents include, but are not limited to, methanol, tetrahydrofuran, ethanol, isopropanol, isobutanol, heptane, acetone, methyl ethyl ketone, methyl isobutyl ketone, methyl acetate, ethyl acetate, toluene, xylene, ethylene glycol alkyl ether, and any combinations or mixtures thereof. In a particular aspect, it is made use of mixtures containing isopropanol, particularly in amounts of 2% to 15% by weight, preferably 3% to 10% by weight, based on the solution mixture used.

The pressure sensitive adhesive composition according to the present disclosure further comprises a thermal crosslinking system, which typically comprises a thermal crosslinker, and optionally a crosslinking accelerator.

In the context of the present disclosure, the term "accelerator" is a substance which supports the crosslinking reaction by ensuring a significantly increased crosslinking reaction rate in comparison to the absence of the accelerator.

The thermal crosslinker for use herein is selected from the group of compounds comprising functional groups selected from the group consisting of epoxide, oxazoline, oxetane, blocked or non-blocked isocyanate, and any combinations or mixtures thereof.

According to an advantageous aspect, the thermal crosslinker for use herein is selected from the group of compounds comprising at least one epoxide group. Suitable thermal crosslinkers containing epoxide groups are in particular polyfunctional epoxides, i.e. those which have at least two epoxide functions per molecule (i.e. are at least difunctional in respect of the epoxide groups). They may be either aromatic or aliphatic compounds.

Examples of suitable polyfunctional epoxides are oligomers of epichlorohydrin, epoxy ethers of polyhydric alcohols (more particularly ethylene, propylene and butylene glycols, polyglycols, thiodiglycols, glycerol, pentaerythritol, sorbitol, polyvinyl alcohol, polyallyl alcohol and the like); epoxy ethers of polyhydric phenols (more particularly resorcinol, hydroquinone, bis(4-hydroxyphenyl)methane, bis(4-hydroxy-3-methylphenyl)methane, bis(4-hydroxy-3,5-dibromophenyl)methane, bis(4-hydroxy-3,5-difluorophenyl)methane, 1,1-bis(4-hydroxyphenyl)ethane, 2,2-bis(4-hydroxyphenyl)propane, 2,2-bis(4-hydroxy-3-methylphenyl)propane, 2,2-bis(4-hydroxy-3-chlorophenyl)propane, 2,2-bis(4-hydroxy-3,5-dichlorophenyl)propane, 2,2-bis(4-hydroxy-3,5-dichlorophenyl)propane, bis(4-hydroxyphenyl)phenylmethane, bis(4-hydroxyphenyl)diphenylmethane, bis(4-hydroxyphenyl)-4'-methylphenylmethane, 1,1-bis(4-hydroxyphenyl)-2,2,2-trichloroethane, bis(4-hydroxyphenyl)-(4-chlorophenyl)methane, 1,1 -bis(4-hydroxyphenyl)cyclohexane, bis(4-hydroxyphenyl)cyclohexylmethane, 4,4'-dihydroxybiphenyl, 2,2'-dihydroxybiphenyl, 4,4'-dihydroxydiphenyl sulphone) and also their hydroxyethyl ethers; phenol-formaldehyde condensation products such as phenol alcohols, phenol aldehyde resins and the like; S- and N-containing epoxides (for example N,N-diglycidylaniline, N,N' dimethyldiglycidyl-4,4-diaminodiphenylmethane) and also epoxides prepared by customary methods from polyunsaturated carboxylic acids or monounsaturated carboxylic esters of unsaturated alcohols, glycidyl esters, polyglycidyl esters, which may be obtained by polymerization or copolymerization of glycidyl esters of unsaturated acids, or are obtainable from other acidic compounds (cyanuric acid, diglycidyl sulphide, cyclic trimethylene trisulphone and/or derivatives thereof, and others).

Examples of ethers containing epoxide groups that are very suitable in accordance with the disclosure include 1,4-butanediol diglycidyl ether, polyglycerol-3 glycidyl ether, cyclohexanedimethanol diglycidyl ether, glycerol triglycidyl ether, neopentyl glycol diglycidyl ether, pentaerythritol tetraglycidyl ether, 1,6-hexanediol diglycidyl ether, polypropylene glycol diglycidyl ether, trimethylolpropane triglycidyl ether, bisphenol A diglycidyl ether and bisphenol F diglycidyl ether.

According to an advantageous aspect of the present disclosure, the thermal crosslinking system for use herein comprises a thermal crosslinker and a crosslinking accelerator. Identifying suitable crosslinking accelerators for use herein is well within the capability of those skilled in the art, in the light of the present disclosure.

In an exemplary aspect of the present disclosure, the crosslinking accelerator for use herein is selected from the group consisting of amines, amides polyamines, polyamides, functional amines and polyamines, functional amides and polyamides, polyfunctional amines and polyamines, polyfunctional amides and polyamides, and any combinations or mixtures thereof.

According to an advantageous aspect, the crosslinking accelerator for use herein is selected from the group of compounds comprising amino groups or amino functionalities. In the context of the present disclosure, the term "amino groups" or "amino functionalities" is meant to refer both to —NH₂ groups and to secondary and tertiary amino groups, in which one or both hydrogen atoms are substituted, particularly by substituted or unsubstituted alkyl groups.

Suitable crosslinking accelerators for use herein include, but are not limited to, 2,2-(di-tert-butylphosphino)ethylamine, 2,2-(diisopropylphosphino)ethylamine, 2,2-(diphenylphosphino)ethylamine, N-(3-dimethylaminopropyl)-N,N-diisopropanolamine, (1R,2R)-2-(benzyloxy)cyclohexylamine and (1S,2S)-2-(benzyloxy)cyclohexylamine, N,N-dimethylethanolamine, bis(2-dimethylaminoethyl)ether, N,N,N'-trimethyl-N'-hydroxyethylbisaminoethyl ether, 2-(2-dimethylaminoethoxy)ethanol, N,N,N'-trimethylaminoethyl-ethanolamine, 2,2'-dimorpholinodiethyl ether, trans-2-aminocyclohexanol, cis-2-aminocyclohexanol, bis(2-hydroxycyclohexyl)methylamine, N-cyclopentyl-2-methoxycyclohexylamine and (1S,2S)-2-(dipbenylphosphino)cyclobexylamine.

Suitable thermal crosslinkers for use herein may also include isocyanates, more particularly trimerized isocyanates and/or sterically hindered isocyanates that are free of blocking agents. Advantageous crosslinker systems and methods are described e.g. in the descriptions of DE 202009013255 U1, EP 2 305 389 A, EP 2 414 143 A, EP 2 192 148 A, EP 2 186 869, EP 0 752 435 A, EP 1 802 722 A, EP 1 791 921 A, EP 1 791 922 A, EP 1 978 069 A, DE 10 2008 059 050 A, US 2013/0190459 and US 2013/0190460, the relevant contents of which are herewith incorporated by reference. Particularly advantageous crosslinker systems and methods are described in EP 0 752 435 A1, EP 1 978 069 A1, US 2013/0190459 and US 2013/0190460. Suitable accelerant and retardant systems for use herein are described e.g. in the description of US-A1- 2011/0281964, the relevant content of which is herewith explicitly incorporated by reference. Suitable thermal crosslinkers for use herein include epoxycyclohexyl derivatives, in particular epoxycyclohexyl carboxylate derivatives, with particular preference to (3,4-epoxycyclohexane)methyl 3,4-epoxycyclohexylcarboxylate, commercially available from Cytec Industries Inc. under tradename UVACURE 1500.

In the context of the present disclosure, the thermal crosslinking system for use herein may be present in the pressure sensitive adhesive composition in any suitable amounts. In some exemplary aspects, the thermal crosslinking system may be present in the pressure sensitive adhesive composition in an amount of from 0.1 wt% to 10 wt%, from 0.1 wt% to 6 wt%, from 0.2 wt% to 5 wt%, or even from 0.2 wt% to 4 wt% , based on the weight of the pressure sensitive adhesive composition.

The pressure sensitive adhesive composition according to the present disclosure further comprises at least one expandable microsphere. In a preferred aspect, the pressure sensitive adhesive composition comprises a plurality of expandable microspheres.

Any commonly known expandable microspheres may be used in the context of the present disclosure. Suitable expandable microspheres for use herein may be easily identified by those skilled in the art, in the light of the present disclosure.

Examples of suitable commercially available expandable microspheres for use herein include those available from Matsumoto Yushi-Seiyaku, Ltd., Osaka, Japan, under the designations "F30D", "F80SD" and "F100D". Also suitable are expandable polymeric microspheres available from Akzo-Nobel under the designations Expancel®, in particular "Expancel 551", "Expancel 461", "Expancel 091", "Expancel 092 DU 40" or even "Expancel 051 DU 40". Other suitable expandable microspheres are commercially available from Henkel under the designation Dualite®.

The expandable microspheres for use herein may be present in the pressure sensitive adhesive composition in any suitable amounts, depending on the properties desired for the resulting pressure sensitive adhesive. In some exemplary aspects, the expandable microspheres may be present in the pressure sensitive adhesive composition in an amount from 1 wt% to 20 wt%, from 3 wt% to 15 wt%, or even from 5 wt% to 15 wt% , based on the weight of the pressure sensitive adhesive composition.

The pressure sensitive adhesive composition according to the present disclosure may further comprise an optional tackifying system, which typically comprises a tackifying resin.

Any commonly known tackifying system may be used in the context of the present disclosure. Suitable tackifying systems for use herein may be easily identified by those skilled in the art, in the light of the present disclosure.

Any tackifiers that are included in the particular pressure-sensitive adhesive compositions are typically selected to be miscible with the polymerizable material. Any tackifier typically included in conventional pressure-sensitive adhesive compositions may be used. Either solid or liquid tackifiers can be added. Solid tackifiers generally have a weight average molecular weight (Mw) of 10,000 grams per mole or less and a softening point above about 70°C. Liquid tackifiers are viscous materials that have a softening point of about 0°C to about 70°C.

Suitable tackifying resins include rosin resins such as rosin acids and their derivatives (e.g., rosin esters); terpene resins such as polyterpenes (e.g., alpha pinene-based resins, beta pinene-based resins, and limonene-based resins) and aromatic-modified polyterpene resins (e.g., phenol modified polyterpene resins); coumarone-indene resins; and petroleum-based hydrocarbon resins such as C5-based hydrocarbon resins, C9-based hydrocarbon resins, C5/C9-based hydrocarbon resins, and dicyclopentadiene-based resins. These tackifying resins, if added, can be hydrogenated to lower their color contribution to the particular pressure-sensitive adhesive composition. Combinations of various tackifiers can be used if desired.

Tackifiers that are rosin esters are the reaction products of various rosin acids and alcohols. These include, but are not limited to, methyl esters of rosin acids, triethylene glycol esters of rosin acids, glycerol esters of rosin acids, and pentaertythritol esters of rosin acids. These rosin esters can be hydrogenated partially or fully to improve stability and reduce their color contribution to the pressure-sensitive adhesive composition. The rosin resin tackifiers are commercially available, for example, from Eastman Chemical Company under the trade designations PERMALYN, STAYBELITE, and FORAL as well as from Newport Industries under the trade designations NUROZ and NUTAC. A fully hydrogenated rosin resin is commercially available, for example, from Eastman Chemical Company under the trade designation FORAL AX-E. A partially hydrogenated rosin resin is commercially available, for example, from Eastman Chemical Company under the trade designation STAYBELITE-E.

Tackifiers that are hydrocarbon resins can be prepared from various petroleum-based feed stocks. These feed stocks can be aliphatic hydrocarbons (mainly C5 monomers with some other monomers present such as a mixture of trans-1,3-pentadiene, cis-1,3-pentadiene, 2-methyl-2-butene, dicyclopentadiene, cyclopentadiene, and cyclopentene), aromatic hydrocarbons (mainly C9 monomers with some other monomers present such as a mixture of vinyl toluenes, dicyclopentadiene, indene, methylstyrene, styrene, and methylindenes), or mixtures thereof. Tackifiers derived from C5 monomers are referred to as C5-based hydrocarbon resins while those derived from C9 monomers are referred to as C9-based hydrocarbon resins. Some tackifiers are derived from a mixture of C5 and C9 monomers or are a blend of C5-based hydrocarbon tackifiers and C9-based hydrocarbon tackifiers. These tackifiers can be referred to as C5/C9-based hydrocarbon tackifiers. Any of these resins can be partially or fully hydrogenated to improve their color, their thermal stability or their process compatibility.

The C5-based hydrocarbon resins are commercially available from Eastman Chemical Company under the trade designations PICCOTAC and EASTOTAC, from Cray Valley under the trade designation WINGTACK, from Neville Chemical Company under the trade designation NEVTAC LX, and from Kolon Industries, Inc. under the trade designation HIKOREZ. The C5-based hydrocarbon resins are commercially available from Eastman Chemical with various degrees of hydrogenation under the trade designation EASTOTACK.

The C9-based hydrocarbon resins are commercially available from Eastman Chemical Company under the trade designation PICCO, KRISTLEX, PLASTOLYN, and PICCOTAC, and ENDEX, from Cray Valley under the trade designations NORSOLENE, from Ruetgers N.V. under the trade designation NOVAREZ, and from Kolon Industries, Inc. under the trade designation HIKOTAC. These resins can be partially or fully hydrogenated. Prior to hydrogenation, the C9-based hydrocarbon resins are often about 40 percent aromatic as measured by proton Nuclear Magnetic Resonance. Hydrogenated C9-based hydrocarbon resins are commercially available, for example, from Eastman Chemical under the trade designations REGALITE and REGALREZ that are 50 to 100 percent (e.g., 50 percent, 70 percent, 90 percent, and 100 percent) hydrogenated. The partially hydrogenated resins typically have some aromatic rings.

Various C5/C9-based hydrocarbon tackifiers are commercially available from Arakawa under the trade designation ARKON, from Zeon under the trade designation QUINTONE, from Exxon Mobile Chemical under the trade designation ESCOREZ, and from Newport Industries under the trade designations NURES and H-REZ (Newport Industries).

Suitable tackifying resins include, for example, terpene phenolics, rosins, rosin esters, esters of hydrogenated rosins, synthetic hydrocarbon resins and combinations thereof. Especially suitable tackifying resins include the commercially available tackifying resins: FORAL 85E (a glycerol ester of highly hydrogenated refined gum rosin) commercially available from Eastman, Middelburg, NL), FORAL 3085 (a glycerol ester of highly hydrogenated refined wood rosin) commercially available from Hercules Inc., Wilmington, DE; ESCOREZ 2520 and ESCOREZ 5615 (aliphatic/aromatic hydrocarbon resins) commercially available from ExxonMobil Corp., Houston, TX; and Regalite 7100 (a partially hydrogenated hydrocarbon resin) commercially available from Eastman, Kingsport, Tennessee.

In one advantageous aspect of the pressure sensitive adhesive composition according to the present disclosure, the tackifying resin is selected from the group consisting of C5-based hydrocarbon resins, C9-based hydrocarbon resins, C5/C9-based hydrocarbon resins, and any combinations or mixtures thereof. In another advantageous aspect, the tackifying resin is selected from the group consisting of hydrogenated terpene resins, hydrogenated rosin resins, hydrogenated C5-based hydrocarbon resins, hydrogenated C9-based hydrocarbon resins, hydrogenated C5/C9-based hydrocarbon resins, and any combinations or mixtures thereof.

In other exemplary aspects, tackifying resins which can be used are pinene resins and indene resins, and rosins, their disproportionated, hydrogenated, polymerized and esterified derivatives and salts, terpene resins and terpene-phenolic resins, and also C5 resins, C9 resins and other hydrocarbon resins. Combinations of these and further resins may also be used with advantage in order to adjust the properties of the resultant composition in accordance with what is desired. With particular preference it is possible to use all resins that are compatible (soluble) with the polyacrylate in question. In a particular aspect, the pressure sensitive adhesive composition according to the disclosure comprises terpene-phenolic resins and/or rosin esters.

According to a particular execution of the pressure sensitive adhesive composition according to the disclosure, the tackifying resin for use herein has a softening point greater than 105°C. Unless otherwise stated, the softening point of the tackifying resin is determined using a Ring-and-Ball Apparatus according to test method ASTM E28-14.

In a particular aspect, the tackifying resin for use herein has a softening point greater than 110°C, greater than 120°C, greater than 130°C or even greater than 140°C, when determined according to test method ASTM E28-14.

In another particular aspect, the tackifying system comprises a tackifying resin or at least one tackifying resin having a softening point greater than 105°C, greater than 110°C, greater than 120°C, greater than 130°C or even greater than 140°C, when measured according to the test method ASTM E28-14.

In still another particular aspect, the tackifying system for use herein comprises a plurality of tackifying resins, wherein all the tackifying resins have a softening point greater than 105°C, greater than 110°C, greater than 120°C, greater than 130°C or even greater than 140°C, when measured according to the test method ASTM E28-14.

According to yet another particular aspect, the tackifying system for optional use herein comprises a mixture of tackifying resins having a combined softening point, and wherein the combined softening point is greater than 105°C, greater than 110°C, greater than 120°C, greater than 130°C or even greater than 140°C, when measured according to the test method ASTM E28-14.

In an advantageous aspect, the tackifying resin having a softening point greater than 105°C is selected from the group of hydrocarbon tackifiers, in particular those selected from the group consisting of hydrogenated hydrocarbon tackifiers, hydrated hydrocarbon tackifiers, and any combinations or mixtures thereof. Advantageously still, the tackifying system comprises a tackifying resin having a softening point greater than 105°C and which is selected from the group consisting of C5 or C9 resins, in particular hydrated C5 or C9 resins.

In a particular execution, the tackifying system for us herein is free of terpene resins, in particular terpene phenolic resins.

The tackifying system for use herein may be present in the pressure sensitive adhesive composition in any suitable amounts, depending on the properties desired for the resulting pressure sensitive adhesive. In some exemplary aspects, the tackifying system may be present in the pressure sensitive adhesive composition in an amount from 20 wt% to 70 wt%, from 25 wt% to 60 wt%, or even from 25 wt% to 50 wt%, based on the weight of the pressure sensitive adhesive composition.

The pressure sensitive adhesive composition according to the present disclosure may further comprise an optional filler material which is preferably selected from the group consisting of filler particles, in particular expanded perlite, microspheres, expendable and expanded microspheres, glassbeads, glass microspheres, silica type fillers, hydrophobic silica type fillers, hydrophilic silica type fillers, hydrophobic fumed silica, hydrophilic fumed silica, fibers, electrically and/or thermally conducting particles, nanoparticles, in particular silica nanoparticles, and any combinations or mixtures thereof. The disclosure is however not that limited as alternative filler material may be easily identified by those skilled in the art, in the light of the present disclosure. In a particular aspect, the filler material, in particular the particulate filler material comprises hollow glass microspheres. The filler material for use herein may be present in the (co)polymerizable material, in any suitable amounts, depending on the desired properties.

As will be apparent to those skilled in the art of formulating pressure sensitive adhesives, the pressure sensitive adhesive composition may further include one or more conventional, but optional additives depending on the envisaged properties for the resulting pressure sensitive adhesive. Exemplary additional additives include, but are not limited to, one or more plasticizers, UV stabilizers, antistatic agents, colorants, antioxidants, fungicides, bactericides, organic and/or inorganic filler particles, pigments, dyes and any combinations thereof. Advantageously, the additional additives for use herein are non-polymerizable additives.

According to a particular execution, the pressure sensitive adhesive composition according to the present disclosure comprises at least one pigment. Various commonly known pigments may be used in the context of the present disclosure. In a particular aspect, the pigment for use herein is a coloring pigments, in particular dark and black pigments, such as preferably carbon blacks.

When used, the pigment for use herein may be present in the pressure sensitive adhesive composition in any suitable amounts, depending on the properties desired for the resulting pressure sensitive adhesive. In some exemplary aspects, the pigment may be present in the pressure sensitive adhesive composition in an amount from 0.5 wt% to 20 wt%, from 1 wt% to 15 wt%, or even from 1 wt% to 10 wt%, based on the weight of the pressure sensitive adhesive composition.

According to a preferred aspect of the present disclosure, the pressure sensitive adhesive composition comprises:
a) from 20 wt% to 80 wt%, from 20 wt% to 70 wt%, from 25 wt% to 60 wt%, or even from 25 wt% to 50 wt% of the (meth)acrylate copolymer component, based on the weight of the pressure sensitive adhesive composition;
b) from 0.1 wt% to 10 wt%, from 0.1 wt% to 6 wt%, from 0.2 wt% to 5 wt%, or even from 0.2 wt% to 4 wt% of a thermal crosslinking system, based on the weight of the pressure sensitive adhesive composition;
c) from 1 wt% to 20 wt%, from 3 wt% to 15 wt%, or even from 5 wt% to 15 wt% of the expandable microsphere, based on the weight of the pressure sensitive adhesive composition;
d) optionally, from 20 wt% to 70 wt%, from 25 wt% to 60 wt%, or even from 25 wt% to 50 wt% of the tackifying system, based on the weight of the pressure sensitive adhesive composition; and
e) optionally, from 0.5 wt% to 20 wt%, from 1 wt% to 15 wt%, or even from 1 wt% to 10 wt% of pigments, based on the weight of the pressure sensitive adhesive composition.

According to a particular aspect of the method of the present disclosure, the uncrosslinked curable precursor of a pressure sensitive adhesive is obtained by a solvent-free manufacturing method. Any solvent-free manufacturing method, well known to those skilled in the art, may be used in the context of the present disclosure.

In an exemplary aspect, the solvent-free manufacturing method comprises a hotmelt processing step, in particular a continuous hotmelt mixing processing step, more in particular a hotmelt extrusion processing step, in particular a twin screw hotmelt extrusion processing step or a planetary roller extrusion step.

According to one particular aspect of the present disclosure, the substrate for use herein is provided with an uneven surface or irregular surface. In a typical aspect, the uneven surface is provided with at least one structure selected from the group consisting of cavities, holes, apertures, orifices, pits, openings, gaps, troughs, edges, depressions, and any combinations thereof.

In an exemplary aspect, the structure is substantially circular and has preferably a depth above 50 µm, above 100 µm, above 150 µm, above 200 µm, above 300 µm, above 400 µm, above 500 µm, above 600 µm, above 700 µm, above 800 µm, or even above 900 µm. In another particular aspect, the structure has a depth to diameter aspect ratio comprised between 0.03 and 0.20, between 0.04 and 0.17, between 0.04 and 0.14, between 0.05 and 0.13, or even between 0.07 and 0.11.

According to an exemplary aspect of the present disclosure, the structure provided in the uneven surface is selected from the group of spot welds, laser beam welds, rivets, punch rivets, clinch points, round joints, point joints, and any combinations thereof. Preferably, the structure is selected from the group of spot welds.

According to an alternative aspect of the present disclosure, the uneven surface for use herein is selected from the group of curved surfaces, bended surfaces, twisted surfaces, angled surfaces, arched surfaces, arced surfaces, and any combinations thereof. In a particular aspect, the uneven surface is selected from the group of radii parts in car body, in particular radii panels.

Other uneven surfaces for use herein may be easily identified by those skilled in the art, in the light of the present disclosure. Materials for forming substrates provided with uneven surfaces are not particularly limited. Exemplary main materials used for forming substrates provided with uneven surfaces are typically selected from the group consisting of metals, plastics, reinforced plastics, composite materials, glass materials, clear coats, wood, coatings, and any combinations thereof.

In the context of the present disclosure, uneven surfaces provided on living substrates such as e.g. parts of human or animal bodies are typically excluded. Exemplary substrates provided with an uneven surface may typically be found in the automotive manufacturing industry, in the aerospace manufacturing industry, or in the construction industry. In a particular aspect of the present disclosure, the substrate for use herein is selected to be an automotive body part.

Any commonly known heating techniques may be used in the context of the present disclosure. Suitable heating techniques for performing the heating steps may be easily identified by those skilled in the art, in the light of the present disclosure.

According to a particular aspect of the method of the present disclosure, the first and/or the second heating step is performed by subjecting the curable precursor of a pressure sensitive adhesive to any of thermal heating, radiation heating, convection heating, induction heating, ultrasonic vibration heating, and any combinations thereof. In a preferred aspect, the first and the second heating step are performed by subjecting the curable precursor of a pressure sensitive adhesive to any of such heating steps.

According to a typical aspect, the first and/or the second heating step is performed by subjecting the curable precursor of a pressure sensitive adhesive to any of thermal heating, radiation heating, convection heating, and any combinations thereof. Methods for performing any of thermal heating, radiation heating or convection heating will be easily identified by those skilled in the art. A suitable induction heating method is described e.g. in US-A1-2003/0168640 (Kirsten).

The method of applying a pressure sensitive adhesive to a substrate according to the present disclosure, comprises the steps of contacting the partially crosslinked curable precursor of a pressure sensitive adhesive obtained in step b) to at least part of the surface of the substrate. In a preferred aspect of the method according to the disclosure, the partially crosslinked curable precursor is coated on the substrate using any conventional coating techniques, modified as appropriate to the particular substrate. In an exemplary aspect, the partially crosslinked curable precursor may be applied by coating methods such as roller coating, flow coating, dip coating, spin coating, spray coating knife coating, extrusion coating and die coating.

According to a particular aspect, the method of the present disclosure further comprises the step of contacting one major surface of the uncrosslinked curable precursor of a pressure sensitive adhesive obtained in step a) or the partially cured precursor of a pressure sensitive adhesive obtained in step b) to an article comprising a rubber-based elastomeric material.

Preferably, the article comprising a rubber-based elastomeric material is a rubber seal or a rubber gasket, in particular those used in the automotive manufacturing industry for rubber seal attachment to hang on parts (such as e.g. doors, hood, trunklid) or to body/structure/chassis.

According to this particular execution of the method of the present disclosure, the step of contacting one major surface of the uncrosslinked curable precursor of a pressure sensitive adhesive obtained in step a) or the partially cured precursor of a pressure sensitive adhesive obtained in step b) to the article comprising a rubber-based elastomeric material, is performed before the step of contacting (the opposite major surface of) the curable precursor of a pressure sensitive adhesive to at least part of the surface the substrate.

In a particular aspect of the method according to the present disclosure, the uncrosslinked curable precursor of a pressure sensitive adhesive obtained in step a) and/or the partially cured precursor of a pressure sensitive adhesive obtained in step b) have a complex viscosity comprised between 2,000 Pa.s to 80,000 Pa.s, when measured at 120°C according to the test method described in the experimental section.

More particularly, the uncrosslinked curable precursor of a pressure sensitive adhesive obtained in step a) and/or the partially cured precursor of a pressure sensitive adhesive obtained in step b) have a complex viscosity comprised between from 2,000 Pa.s to 60,000 Pa.s, between 2,500 Pa.s to 50,000 Pa.s, between 3,000 Pa.s to 40,000 Pa.s, between 3,500 Pa.s to 35,000 Pa.s, between 4,000 Pa.s to 30,000 Pa.s, between 4,000 Pa.s to 20,000 Pa.s, between 4,000 Pa.s to 15,000 Pa.s, or even between 4,000 Pa.s to 10,000 Pa.s, when measured at 120°C according to the test method described in the experimental section.

Pressure sensitive adhesives applied by the method of the present disclosure, and whereby the uncrosslinked curable precursor of a pressure sensitive adhesive obtained in step a) and/or the partially cured precursor of a pressure sensitive adhesive obtained in step b) have such complex viscosity values are outstandingly suitable for bonding to a substrate provided with an uneven surface. Without wishing to be bound by theory, it is believed that this outstanding suitability is due in particular to the specific complex viscosity range which has been identified as providing excellent surface wetting properties on substrates provided with uneven or irregular surfaces. These outstanding wetting characteristics provide the corresponding pressure sensitive adhesives with excellent conformability properties to surfaces having challenging topologies such as e.g. cavities or curved surfaces.

According to another aspect, the present disclosure is directed to a composite assembly comprising:
a) a substrate provided with an uneven surface; and
b) an uncrosslinked curable precursor of a pressure sensitive adhesive or a partially cured precursor of a pressure sensitive adhesive as described above applied onto at least part of the surface of the substrate, thereby forming a layer of a curable precursor of a pressure sensitive adhesive.

In a preferred aspect of the composite assembly according to the present disclosure, the substrate is an automotive body part.

In still another aspect, the present invention relates to the use of an uncrosslinked curable precursor of a pressure sensitive adhesive or a partially cured precursor of a pressure sensitive adhesive as described above, for the bonding to a substrate provided with an uneven surface.

In yet another aspect, the present invention relates to the use of an uncrosslinked curable precursor of a pressure sensitive adhesive or a partially cured precursor of a pressure sensitive adhesive as described above, for industrial applications, in particular for construction applications and automotive applications, more in particular for taped seal on body, taped seal on door, exterior and interior parts attachment and weather-strip tape applications for the automotive industry.

In yet another aspect, the present invention relates to the use of a method as described above, for industrial applications, in particular for construction applications and automotive applications, more in particular for taped seal on body, taped seal on door, exterior and interior parts attachment and weather-strip tape applications for the automotive industry. The method or the uncrosslinked curable precursor of a pressure sensitive adhesive or the partially cured precursor of a pressure sensitive adhesive as described above, may alternatively be used for rubber seal attachment to hang on automotove parts (such as e.g. doors, hood, trunklid) or to automotive body/structure or chassis.

### EXAMPLES

The invention is further illustrated by the following examples. These examples are merely for illustrative purposes only and are not meant to be limiting on the scope of the appended claims.

### Test Methods applied:

### Tensile testing in OLS (Overlap shear) geombetry at 100m/min (in accordance with ASTM D897)

Overlap shear strength is determined according to ASTM D897 using a tensile tester of the type ZWICK/ROELL Z020 (available from Zwick GmbH & Co. KG, Ulm, Germany) at a crosshead speed of 100 mm/min.

For the test assembly preparation, two aluminium test panels (as later described under point c.), are joined in a overlap connection of 10 mm width and 25mm length using pressure sensitive adhesive assemblies of the current invention and by pressing these overlap shear test assemblies for 15 seconds with 300N (+/-5N). The test assemblies are then conditioned prior to testing for 24 hours at 23°C (+/- 2°C) and 50 % humidity (+/-5%).

### Complex viscosity @ 120°C:

All complex viscosity measurements are conducted with a standard rheometer, RDAII (Rheoservice, Germany) in plate-plate geometry, wherein the plate diameter is 8mm. Temperature control is achieved by using an oven at a heating rate of 20 K/min. Deformation of 1% is applied at an oscillation frequency of 1 Hz. Viscosity is monitored continuously during the measurement from room temperature up to 160°C. For further evaluation, viscosity values at 20°C and 120°C are determined and recorded.

### Test panels/substrates used for testing:

Aluminum test panels in accordance with ASTM B211 having a dimension of 50 mm x 25 mm x 1 mm. Prior to the preparation of an OLS test assembly, the aluminium panels are roughened using ScotchBrite 4774 (commercially available by 3M) and afterwards wiped once with isopropyl alcohol. Drying is done using a paper tissue. The cleaned aluminum test panel surface is then further pretreated with a commercially available 3M Primer P94.

### Raw materials:

In the examples, the following raw materials are used:
**2-Ethyl hexyl acrylate** (C8-acrylate, 2-EHA): is an ester of 2-ethylalcohol and acrylic acid which is obtained from BASF SE, Germany.
**Acrylic acid** (AA) is obtained from Arkema, Italy.
**Omnirad BDK:** 2,2-dimethoxy-2-phenylacetophenone is a UV-initiator for radical polymerization, commercially available from iGm resins, Waalwijk Netherlands.
**1,6-Hexanedioldiacrylate** (HDDA) is a difunctional acrylic monomer obtained from BASF SE, Germany.
**ERISYS GE-40** (Pentaerythritol Polyglycidyl Ether): is an epoxy-based thermal crosslinking agent, commercially available from CVC Thermoset Specialties.
**Desmodur BL-3370** (blocked aliphatic polyisocyanate): is a blocked thermal crosslinking agent, commercially available from Bayer Material Science.
**DICY** (Dicyandiamide): is a thermal crosslinking accelerator, commercially available from Sigma Aldrich.
**Ancamine 2442** (modified polyamine): is a latent thermal crosslinking accelerator, commercially available from Air Products.
**Omicure U-52** (Phenyl Dimethyl Urea): is a latent thermal crosslinking accelerator, commercially available from CVC Thermoset Specialties.
**3M Glass bubbles** (K15) are hollow glass bubbles with a diameter of 115 µm, available from 3M, Germany.
**Primer 94 (P94)** : adhesion promoter for pressure sensitive adhesives to surfaces such as polyethylene, polypropylene, ABS, PET/PBT blends, concrete, wood, glass, metal and painted metal surfaces, commercially available from 3M Deutschland GmbH, Germany.

### Preparation of the curable precursors of pressure sensitive adhesives:

The acrylic curable precursors of pressure sensitive adhesives CP1 to CP6 are prepared by initially pre-polymerizing the C8 acrylate (2-EHA), the selected amount of acrylic acid, and 0.04 pph of Omnirad BDK as a photoinitiator in a glass vessel. Before the UV exposure is initiated, the mixture is flushed 10 minutes with nitrogen and nitrogen is also bubbled into the mixture the whole time until the polymerization process is stopped by flushing the mixture with oxygen. All the time, the mixture is stirred with a propeller stirrer (300 U/min) and the reaction is stopped when a viscosity around 4500 mPas is reached (when measured with a Brookfield viscosimeter, T = 25 °C, spindle 4, 12 rpm). Additionally, the remaining amount of 0.36 pph Omnirad BDK, 0.1 pph HDDA, 9 pph of glass bubbles K15, and the selected amount of thermal crosslinker are added to the polymer precursor composition and homogenized using a mechanical stirrer for 15 minutes. Just before thermal crosslinking/coating, a thermal crosslinking accelerator is optionally added to the polymer precursor composition and mixed until it has dispersed.

The exact formulations of the curable precursors are later listed (in pph) in Table 2 below.

The curable precursors are coated to a thickness of 1200 µm on a 75 µm solvent free siliconized PET-liner (SLVK-Liner, 300mm × 300 mm) with a coating knife of a lab coater. For coating the curable precursors, the line speed of the coater is set to 0.82 m/min. The curable precursors coated on the liner are exposed to actinic radiations in a UV station with a length of 300 cm at the line speed given above. The total radiation intensity irradiated cumulatively from top and bottom is listed in Table 1.

**Table 1**

| | Zone 1 | Zone 2 | Zone 3 |
|---|---|---|---|
| Total intensity [mW/cm²] | 2.07 | 4.27 | 4.98 |

### Formulations of the curable precursors used for making the pressure sensitive adhesives

The formulations of curable precursors CP1 to CP6 used for making the pressure sensitive adhesives are listed in Table 2 below.

**Table 2**

| Curable precursor | Monomer | | Photoinitiator | Comonomer | Crosslinking agent | | Crosslinking accelerator | | | Filler |
|---|---|---|---|---|---|---|---|---|---|---|
| | 2-EHA | AA | BDK | HDDA | GE-40 | BL-3370 | DICY | A-2442 | U-52 | K15 |
| | wt % | wt % | pph | pph | | | | | | pph |
| CP1 | 95 | 5 | 0.40 | 0.1 | 1 | | 0.5 | | | 9 |
| CP2 | 95 | 5 | 0.40 | 0.1 | 1 | | | | | 9 |
| CP3 | 95 | 5 | 0.40 | 0.1 | 1 | | 0.1 | | | 9 |
| CP4 | 95 | 5 | 0.40 | 0.1 | 1 | | | | 0.1 | 9 |
| CP5 | 95 | 5 | 0.40 | 0.1 | 1 | | | 0.5 | | 9 |
| CP6 | 95 | 5 | 0.40 | 0.1 | | 1 | | | | 9 |

The curable precursors coated on the siliconized PET-liner are subjected to first heating step at 150°C for 5 minutes in a conventional oven. The exposed major side of the curable precursors are then coated onto the aluminum test panels and subjected to a second heating step at 150°C for 15 minutes in the oven before further OLS tensile testing.

### Test Results:

### OLS tensile results

The results of the OLS tensile testing for the pressure sensitive adhesives made from curable precursors CP1 - CP6 are provided in Table 3. In this table, the resulting forces at 2mm and 4mm elongation for uncrosslinked and thermally crosslinked pressure sensitive adhesives are listed.

**Table 3**

| Curable precursor used | F (2mm) / N **(uncrosslinked)** | F (2mm) / N **(total curing 20 min at 150°C)** | F (4mm) / N **(uncrosslinked)** | F (4mm) / N **(total curing 20 min at 150°C)** |
|---|---|---|---|---|
| CP1 | 41 | 100 | 82 | 225 |
| CP2 | 43 | 54 | 89 | 121 |
| CP3 | 45 | 73 | 89 | 166 |
| CP4 | 43 | 63 | 89 | 134 |
| CP5 | 40 | 88 | 83 | 194 |
| CP6 | 34 | 42 | 62 | 100 |

## Claims

1. A method of applying a pressure sensitive adhesive to a substrate, which comprises the steps of:
a) providing an uncrosslinked curable precursor of a pressure sensitive adhesive comprising:
(1) a (meth)acrylate copolymer component comprising:
i. C₁-C₃₂ (meth)acrylic acid ester monomer units;
ii. ethylenically unsaturated monomer units having functional groups selected from the group consisting of acid, hydroxyl, acid anhydride, epoxide, amine, amide groups, and any combinations thereof; and
iii. optionally, further ethylenically unsaturated monomer units which are copolymerizable with monomer units (i) and/or (ii);
(2) a thermal crosslinking system comprising a thermal crosslinker and optionally, a crosslinking accelerator; wherein the thermal crosslinker is selected from the group of compounds comprising functional groups selected from the group consisting of epoxide, oxazoline, oxetane, blocked or non-blocked isocyanates, and any combinations or mixtures thereof;
(3) at least one expandable microsphere;
(4) optionally, a tackifying system; and
(5) optionally, at least one pigment;
b) subjecting the curable precursor of a pressure sensitive adhesive to a first heating step such that the curable precursor of a pressure sensitive adhesive is partially crosslinked;
c) contacting the curable precursor of a pressure sensitive adhesive obtained in step b) to at least part of the surface of the substrate;
d) subjecting the curable precursor of a pressure sensitive adhesive to a second heating step such that the curable precursor of a pressure sensitive adhesive is fully crosslinked; and
e) optionally, allowing the polymeric foam layer to cool down on the substrate.

2. A method according to claim 1, wherein the substrate is provided with an uneven surface.

3. A method according to claim 2, wherein the uneven surface is provided with at least one structure selected from the group consisting of cavities, holes, apertures, orifices, pits, openings, gaps, troughs, edges, depressions, and any combinations thereof.

4. A method according to any of claims 2 to 3, wherein the uneven surface is selected from the group of curved surfaces, bended surfaces, twisted surfaces, angled surfaces, arched surfaces, arced surfaces, and any combinations thereof.

5. A method according to any of the preceding claims, wherein the substrate is an automotive body part.

6. A method according to any of the preceding claims, wherein the first and/or the second heating step is performed by subjecting the curable precursor of a pressure sensitive adhesive to any of thermal heating, radiation heating, convection heating, induction heating, ultrasonic vibration heating, and any combinations thereof.

7. A method according to any of the preceding claims, wherein the uncrosslinked curable precursor of a pressure sensitive adhesive is obtained by a solvent-free manufacturing method.

8. A method according to any of the preceding claims, wherein the ethylenically unsaturated monomer units having functional groups are selected from the group of ethylenically unsaturated monomer units having functional groups selected from the group consisting of carboxyl, sulphonic acid, phosphonic acid, hydroxyl, acid anhydride, epoxide, amine, amide groups, and any combinations thereof.

9. A method according to any of the preceding claims, wherein the crosslinking accelerator is selected from the group consisting of amines, amides, ureas, polyamines, polyamides, polyureas, functional amines and polyamines, functional amides and polyamides, polyfunctional amines and polyamines, polyfunctional amides and polyamides, and any combinations or mixtures thereof.

10. A composite assembly comprising:
a) a substrate provided with an uneven surface; and
b) an uncrosslinked curable precursor of a pressure sensitive adhesive or a partially cured precursor of a pressure sensitive adhesive as described in any of claims 1 to 9 applied onto at least part of the surface of the substrate, thereby forming a layer of a curable precursor of a pressure sensitive adhesive.

11. A composite assembly according to claim 10, wherein the substrate is as described in any of claims 2 to 5.

12. Use of an uncrosslinked curable precursor of a pressure sensitive adhesive or a partially cured precursor of a pressure sensitive adhesive as described in any of claims 1 to 9, for the bonding to a substrate provided with an uneven surface.

13. Use of an uncrosslinked curable precursor of a pressure sensitive adhesive or a partially cured precursor of a pressure sensitive adhesive as described in any of claims 1 to 9 or of a method according to any of claims 1 to 9, for industrial applications, in particular for construction applications and automotive applications, more in particular for taped seal on body, taped seal on door, exterior and interior parts attachment and weather-strip tape applications for the automotive industry.

## Patentansprüche

1. Ein Verfahren zum Auftragen eines Haftklebstoffs auf ein Substrat, umfassend die Schritte:
a) Bereitstellen eines unvernetzten härtbaren Vorläufers eines Haftklebstoffs, umfassend:
(1) einen (Meth)acrylat-Copolymer-Bestandteil, umfassend:
i. C₁-C₃₂-(Meth-)acrylsäureester-Monomereinheiten;
ii. ethylenisch ungesättigte Monomereinheiten mit funktionellen Gruppen, ausgewählt aus der Gruppe bestehend aus Säure-, Hydroxyl-, Säureanhydrid-, Epoxid-, Amin-, Amidgruppen und beliebigen Kombinationen davon; und
iii. wahlweise weitere ethylenisch ungesättigte Monomereinheiten, die mit Monomereinheiten (i) und/oder (ii) copolymerisierbar sind;
(2) ein thermisches Vernetzungssystem, das einen thermischen Vernetzer und wahlweise einen Vernetzungsbeschleuniger umfasst; wobei der thermische Vernetzer ausgewählt ist aus der Gruppe von Verbindungen, die funktionelle Gruppen umfassen, die ausgewählt sind aus der Gruppe bestehend aus Epoxid, Oxazolin, Oxetan, blockierten oder nicht blockierten Isocyanaten, und beliebigen Kombinationen oder Mischungen davon;
(3) mindestens ein expandierbares Mikrokügelchen;
(4) wahlweise ein klebrigmachendes System; und
(5) wahlweise mindestens ein Pigment;
b) Unterziehen des härtbaren Vorläufers eines Haftklebstoffs einem ersten Erwärmungsschritt, so dass der härtbare Vorläufer eines Haftklebstoffs teilweise vernetzt wird;
c) Inkontaktbringen des härtbaren Vorläufers eines Haftklebstoffs, der in Schritt b) erhalten wird, mit mindestens einem Teil der Oberfläche des Substrats;
d) Unterziehen des härtbaren Vorläufers eines Haftklebstoffs einem zweiten Erwärmungsschritt, so dass der härtbare Vorläufer eines Haftklebstoffs vollständig vernetzt wird; und
e) wahlweise Abkühlenlassen der Polymerschaumschicht auf dem Substrat.

2. Ein Verfahren nach Anspruch 1, wobei das Substrat mit einer unebenen Oberfläche versehen ist.

3. Ein Verfahren nach Anspruch 2, wobei die unebene Oberfläche mit mindestens einer Struktur versehen ist, die ausgewählt ist aus der Gruppe bestehend aus Hohlräumen, Löchern, Durchbrüchen, Durchlässen, Vertiefungen, Öffnungen, Lücken, Mulden, Kanten, Einsenkungen und beliebigen Kombinationen davon.

4. Ein Verfahren nach einem der Ansprüche 2 bis 3, wobei die unebene Oberfläche ausgewählt ist aus der Gruppe aus gekrümmten Oberflächen, gebogenen Oberflächen, verdrehten Oberflächen, gewinkelten Oberflächen, gewölbten Oberflächen, bogenförmigen Oberflächen und beliebigen Kombinationen davon.

5. Ein Verfahren nach einem der vorstehenden Ansprüche, wobei das Substrat ein Automobilkarosserieteil ist.

6. Ein Verfahren nach einem der vorstehenden Ansprüche, wobei der erste und/oder der zweite Erwärmungsschritt durchgeführt wird, indem der härtbare Vorläufer eines Haftklebstoffs einem beliebigen aus thermischem Erwärmen, Strahlungserwärmen, Konvektionserwärmen, Induktionserwärmen, Ultraschallvibrationserwärmen und beliebigen Kombinationen davon unterzogen wird.

7. Ein Verfahren nach einem der vorstehenden Ansprüche, wobei der unvernetzte härtbare Vorläufer eines Haftklebstoffs durch ein lösungsmittelfreies Herstellungsverfahren erhalten wird.

8. Ein Verfahren nach einem der vorstehenden Ansprüche, wobei die ethylenisch ungesättigten Monomereinheiten mit funktionellen Gruppen ausgewählt sind aus der Gruppe aus ethylenisch ungesättigten Monomereinheiten mit funktionellen Gruppen, ausgewählt aus der Gruppe bestehend aus Carboxyl-, Sulfonsäure-, Phosphonsäure-, Hydroxyl-, Säureanhydrid-, Epoxid-, Amin-, Amidgruppen und beliebigen Kombinationen davon.

9. Ein Verfahren nach einem der vorstehenden Ansprüche, wobei der Vernetzungsbeschleuniger ausgewählt ist aus der Gruppe bestehend aus Aminen, Amiden, Harnstoffen, Polyaminen, Polyamiden, Polyharnstoffen, funktionellen Aminen und Polyaminen, funktionellen Amiden und Polyamiden, polyfunktionellen Aminen und Polyaminen, polyfunktionellen Amiden und Polyamiden und beliebigen Kombinationen oder Mischungen davon.

10. Eine Verbundanordnung, umfassend:
a) ein Substrat, das mit einer unebenen Oberfläche versehen ist; und
b) einen unvernetzten härtbaren Vorläufer eines Haftklebstoffs oder einen teilweise gehärteten Vorläufers eines Haftklebstoffs nach einem der Ansprüche 1 bis 9, der auf mindestens einen Teil der Oberfläche des Substrats aufgebracht ist, wodurch eine Schicht eines härtbaren Vorläufers eines Haftklebstoffs gebildet wird.

11. Eine Verbundanordnung nach Anspruch 10, wobei das Substrat wie in einem der Ansprüche 2 bis 5 beschrieben ist.

12. Verwendung eines unvernetzten härtbaren Vorläufers eines Haftklebstoffs oder eines teilweise gehärteten Vorläufers eines Haftklebstoffs, wie in einem der Ansprüche 1 bis 9 beschrieben, zum Verbinden mit einem Substrat, das mit einer unebenen Oberfläche versehen ist.

13. Verwendung eines unvernetzten härtbaren Vorläufers eines Haftklebstoffs oder eines teilweise gehärteten Vorläufers eines Haftklebstoffs, wie in einem der Ansprüche 1 bis 9 beschrieben, oder eines Verfahrens nach einem der Ansprüche 1 bis 9 für industrielle Anwendungen, insbesondere für Konstruktionsanwendungen und Automobilanwendungen, insbesondere für Klebebanddichtungen an der Karosserie, Klebebanddichtungen an der Tür, Befestigung von Außen- und Innenteilen und Dichtungsstreifenbandanwendungen für die Automobilindustrie.

## Revendications

1. Procédé d'application d'un adhésif sensible à la pression sur un substrat, qui comprend les étapes consistant à :
a) fournir un précurseur durcissable non réticulé d'un adhésif sensible à la pression comprenant:
(1) un composant copolymère de (méth)acrylate comprenant :
i. des unités monomères ester d'acide (méth)acrylique en C₁ à C₃₂ ;
ii. des unités monomères à insaturation éthylénique ayant des groupes fonctionnels choisis dans le groupe constitué de groupes acide, hydroxyle, anhydride d'acide, époxyde, aminé, amide, et l'une quelconque des combinaisons de ceux-ci ; et
iii. facultativement, d'autres unités monomères à insaturation éthylénique qui sont copolymérisables avec les unités monomères (i) et/ou (ii) ;
(2) un système de réticulation thermique comprenant un agent de réticulation thermique et facultativement, un accélérateur de réticulation ; dans lequel l'agent de réticulation thermique est choisi dans le groupe de composés comprenant des groupes fonctionnels choisis dans le groupe constitué d'époxyde, oxazoline, oxétane, isocyanates séquencés ou non séquencés, et l'une quelconque des combinaisons ou mélanges de ceux-ci ;
(3) au moins une microsphère expansible ;
(4) facultativement, un système poisseux ; et
(5) facultativement, au moins un pigment ;
b) soumettre le précurseur durcissable d'un adhésif sensible à la pression à une première étape de chauffage de telle sorte que le précurseur durcissable d'un adhésif sensible à la pression soit partiellement réticulé ;
c) mettre en contact le précurseur durcissable d'un adhésif sensible à la pression obtenu à l'étape b) sur au moins une partie de la surface du substrat ;
d) soumettre le précurseur durcissable d'un adhésif sensible à la pression à une seconde étape de chauffage de telle sorte que le précurseur durcissable d'un adhésif sensible à la pression est totalement réticulé ; et
e) facultativement, laisser la couche de mousse polymère refroidir sur le substrat.

2. Procédé selon la revendication 1, dans lequel le substrat est pourvu d'une surface irrégulière.

3. Procédé selon la revendication 2, dans lequel la surface irrégulière est pourvue d'au moins une structure choisie dans le groupe constitué de cavités, trous, perforations, orifices, fosses, ouvertures, espaces, creux, bords, dépressions, et l'une quelconque des combinaisons de ceux-ci.

4. Procédé selon l'une quelconque des revendications 2 à 3, dans lequel la surface irrégulière est choisie dans le groupe de surfaces incurvées, surfaces courbées, surfaces torsadées, surfaces en angle, surfaces arquées, surfaces en arc, et l'une quelconque des combinaisons de celles-ci.

5. Procédé selon l'une quelconque des revendications précédentes, dans lequel le substrat est une partie de carrosserie d'automobile.

6. Procédé selon l'une quelconque des revendications précédentes, dans lequel la première et/ou la seconde étape de chauffage est effectuée en soumettant le précurseur durcissable d'un adhésif sensible à la pression à l'un quelconque parmi le chauffage thermique, le chauffage par rayonnement, le chauffage par convection, le chauffage par induction, le chauffage par vibration ultrasonore, et l'une quelconque des combinaisons de ceux-ci.

7. Procédé selon l'une quelconque des revendications précédentes, dans lequel le précurseur durcissable non réticulé d'un adhésif sensible à la pression est obtenu par un procédé de fabrication exempt de solvant.

8. Procédé selon l'une quelconque des revendications précédentes, dans lequel les unités monomères à insaturation éthylénique ayant des groupes fonctionnels sont choisies dans le groupe d'unités monomères à insaturation éthylénique ayant des groupes fonctionnels choisis dans le groupe constitué de groupes carboxyle, acide sulfonique, acide phosphonique, hydroxyle, anhydride d'acide, époxyde, amine, amide, et l'une quelconque des combinaisons de ceux-ci.

9. Procédé selon l'une quelconque des revendications précédentes, dans lequel l'accélérateur de réticulation est choisi dans le groupe constitué d'amines, amides, urées, polyamines, polyamides, polyurées, amines et polyamines fonctionnelles, amides et polyamides fonctionnels, amines et polyamines polyfonctionnelles, amides et polyamides polyfonctionnels, et l'une quelconque des combinaisons ou mélanges de ceux-ci.

10. Ensemble composite comprenant :
a) un substrat pourvu d'une surface irrégulière ; et
b) un précurseur durcissable non réticulé d'un adhésif sensible à la pression ou un précurseur partiellement durci d'un adhésif sensible à la pression tel que décrit dans l'une quelconque des revendications 1 à 9 appliqué sur au moins une partie de la surface du substrat, formant de ce fait une couche d'un précurseur durcissable d'un adhésif sensible à la pression.

11. Ensemble composite selon la revendication 10, dans lequel le substrat est tel que décrit dans l'une quelconque des revendications 2 à 5.

12. Utilisation d'un précurseur durcissable non réticulé d'un adhésif sensible à la pression ou d'un précurseur partiellement durci d'un adhésif sensible à la pression tel que décrit dans l'une quelconque des revendications 1 à 9, pour la liaison à un substrat pourvu d'une surface irrégulière.

13. Utilisation d'un précurseur durcissable non réticulé d'un adhésif sensible à la pression ou d'un précurseur partiellement durci d'un adhésif sensible à la pression tel que décrit dans l'une quelconque des revendications 1 à 9 ou d'un procédé selon l'une quelconque des revendications 1 à 9, pour des applications industrielles, particulièrement pour des applications de construction et des applications automobiles, plus particulièrement pour le joint à bande sur la carrosserie, le joint à bande sur la porte, la fixation de pièces extérieures et intérieures et des applications de bandes d'étanchéité pour l'industrie automobile.
